# EUROPÄISCHE PATENTSCHRIFT

(11) **EP 0 568 790 B1**
(45) Veröffentlichungstag und Bekanntmachung des Hinweises auf die Patenterteilung: **13.12.1995**
(21) Anmeldenummer: 93103621.4
(22) Anmeldetag: 06.03.1993
(51) Int. Cl.: G01L 19/12

(54) **Einrichtung zur optischen Anzeige des Druckes eines Mediums**
Device for optically indicating the pressure of a medium
Dispositif d'indication optique de la pression d'un médium

(30) Priorität: 04.05.1992 DE 4214804
(43) Veröffentlichungstag der Anmeldung: 10.11.1993
(73) Patentinhaber: WABCO STANDARD GmbH, D-53008 Bonn (DE)
(72) Erfinder: Singbartl, Günther, W-3000 Hannover 1 (DE)
(74) Vertreter: Schrödter, Manfred, Dipl.-Ing.

(56) Entgegenhaltungen:
- WO-A-88/07663
- FR-A- 2 464 468
- FR-A- 2 479 465
- GB-A- 2 200 993
- GB-A- 2 229 003

## Beschreibung

Die Erfindung betrifft eine Einrichtung zur optischen Anzeige des Druckes eines Mediums, insbesondere des Luftdruckes in einem Fahrzeugreifen, gemäß dem Oberbegriff des Patentanspruchs 1.

Eine derartige Einrichtung ist aus der DE 40 07 388 C2 bekannt. Diese bekannte Einrichtung weist ein optisch transparentes Element auf, welches sich aus einem lichtabschirmenden Element und einer mit diesem verbundenen Blase zusammensetzt, welche mit einer lichtabsorbierenden Flüssigkeit gefüllt ist. Das optisch transparente Element wirkt mit einem auf das optisch transparente Element zu bzw. von diesem weg bewegbaren Kolben zusammen, welcher auf seiner dem optisch transparenten Element zugewandten Seite eine Farbschicht trägt. Die Bewegung des Kolbens auf das optisch transparente Element zu erfolgt mittels der Kraft eines den Kolben gegen eine Federkraft beaufschlagenden Druckmittels. Die Bewegung des Kolbens vom optisch transparenten Element weg erfolgt bei Druckabfall mittels der Federkraft.

Ist kein Druck oder nur ein geringer Druck vorhanden, der den Kolben beaufschlagt, so daß vom Kolben kein Druck auf die Blase des optisch transparenten Elementes ausgeübt wird, so ist das gesamte flache lichtabschirmende Element gleichmäßig mit der lichtabsorbierenden Flüssigkeit in der Blase ausgefüllt. In diesem Zustand wird das von der Farbschicht des Kolbens reflektierte Licht von der lichtabsorbierenden Flüssigkeit absorbiert. Auf die Farbschicht des Kolbens fallendes Licht wird also von der lichtabsorbierenden Flüssigkeit in der Blase abgeschirmt, so daß die Farbschicht nicht sichtbar ist.

Wird der Kolben vom Druckmittel in Richtung auf das optisch transparente Element zu bewegt, so weit, bis die die Farbschicht tragende Fläche des Kolbens gegen die die lichtabsorbierende Flüssigkeit absorbierende Blase gedrückt wird, so weicht die Flüssigkeit in den Randbereich der Blase aus. Die einander zugewandten Seiten der Blase kommen aneinander zur Anlage, so daß die Lichtabsorbtion durch die lichtabsorbierende Flüssigkeit entfällt. An der Farbschicht des Kolbens reflektiertes Licht tritt durch das optisch transparente Element hindurch, so daß die Farbschicht des Kolbens von außen sichtbar wird.

Diese bekannte Einrichtung hat den Nachteil, relativ aufwendig im Aufbau und auch empfindlich zu sein. Z. B. können Undichtigkeiten an der die lichtabsorbierende Flüssigkeit enthaltenden Blase auftreten, so daß die Flüssigkeit verloren geht und somit die Einrichtung zur optischen Anzeige des Druckes eines Mediums wirkungslos wird.

Der Erfindung liegt die Aufgabe zugrunde, eine Einrichtung der Eingangs genannten Art zu schaffen, die einfach im Aufbau sowie kostengünstig und betriebssicher ist.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, durch die Ausnutzung des physikalischen Effektes der Totalreflektion sowie der Anordnung eines farbigen Bereichs z. B. in Form eines Farbstreifens am optisch transparenten Element und der andersfarbigen Gestaltung der von dem Kolben bewegbaren Farbfläche eine optische Anzeige in Form eines Farbwechsels zu erreichen.

Ein weiterer Vorteil der Erfindung ist darin zu sehen, daß die Änderung des Druckes des Mediums anhand eines Farbwechsels im Bereich der als Sichtfenster ausbildbaren Anzeigefläche des optisch transparenten Elementes wahrnehmbar ist. Gemäß einer Weiterbildung des Erfindungsgegenstandes weist das optisch transparente Element im Bereich der Anzeigefläche eine linsenförmige Oberflächenkrümmung in Form einer Konvexlinse auf. Dies führt zu einer vergrößerten Wahrnehmung des Farbeindruckes im Bereich der Anzeigefläche des optisch transparenten Elementes.

Bei einer weiteren Weiterbildung des Erfindungsgegenstandes besteht das Teil, das die vom Kolben bewegbare Farbfläche trägt aus einem elastisch verformbaren Werkstoff, wie z. B. aus einem Elastomer. Durch einen solchen Werkstoff wird sichergestellt, daß etwaige Unebenheiten an der den Hohlraum des optisch transparenten Elementes begrenzenden Wand (Grenzfläche) aufgrund der Verformbarkeit des erwähnten Teiles ausgeglichen werden. Es ist somit nicht notwendig, die den Hohlraum des optisch transparenten Elementes begrenzende Wand (Grenzfläche) als absolut glatte Fläche zu fertigen. Viermehr können durch diese Maßnahme kleine Unebenheiten der den Hohlraum des optisch transparenten Elementes begrenzenden Wand (Grenzfläche) in Kauf genommen werden.

Vorteilhafterweise ist der Hohlraum wenigstens in seinem dem farbigen Bereich gegenüber liegenden Bereich kegelförmig ausgebildet; entsprechend weist das die Farbfläche tragende Teil, welches in den kegelförmigen Bereich der Ausnehmung des optisch transparenten Elementes eintaucht, ebenfalls Kegelform auf. Der Hohlraum kann auch eine von der Kegelform abweichende Form haben, wobei dann selbstverständlich auch das in den Hohlraum eintauchende Teil diese Form aufweist.

In vorteilhafterweise wird die Rückstellkraft für den Kolben von einem Teil aus einem elastomeren Werkstoff erzeugt, wobei dieses Teil zwischen den einander zugewandten Seiten des optisch transparenten Elementes und des Kolbens angeordnet ist.

Gemäß einer Weiterbildung des Erfindungsgegenstandes wird der Farbstreifen von einer Dichtung aus einem elastomeren Werkstoff gebildet, wobei die Dichtung zwischen dem optisch transparenten Element und dem diesem zugewandten Bereich der Wand des das optisch transparente Element aufnehmenden Gehäuses angeordnet ist.

Gemäß einer vorteilhaften Weiterbildung des Erfindungsgegenstandes ist der Kolben als Membran mit einem angeformten und die Farbfläche tragenden Elastomer-Füllstück für den Hohlraum des optisch transparenten Elementes ausgebildet.

Vorteilhafterweise ist der farbige Bereich in das optisch transparente Element eingegossen bzw. eingespritzt.

Anhand der Zeichnung werden nachfolgend vier Ausführungsbeispiele der Erfindung näher erläutert.

Es zeigen:
- Figur 1: eine erfindungsgemäße Einrichtung zur optischen Anzeige des Druckes eines Mediums;
- Figur 2: eine der in Figur 1 gezeigten Einrichtung im wesentlichen gleiche Einrichtung, wobei der farbige Bereich jedoch von einem Dichtelement aus einem elastischen Werkstoff gebildet wird;
- Figur 3: eine mit der in Figur 1 gezeigten Einrichtung vergleichbare Einrichtung, wobei der Kolben jedoch als Membrankolben ausgebildet ist, welcher auf seiner dem optisch transparenten Element zugewandten Seite eine Anformung trägt, die mit dem optisch transparenten Element zusammenwirkt und
- Figur 4: eine der in Figur 3 gezeigten Einrichtung vergleichbare Einrichtung, wobei der den farbigen Bereich bildende Farbstreifen jedoch durch ein farbiges Dichtelement ersetzt ist.

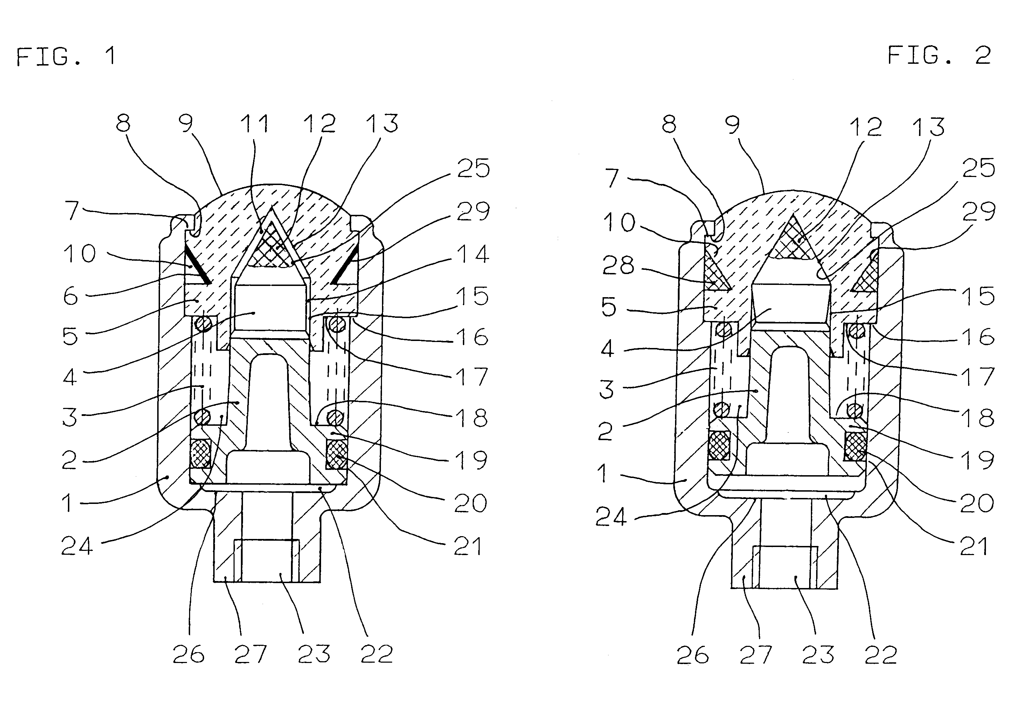

In Figur 1 ist ein topfförmiges Gehäuse 1 dargestellt, dessen Bodenteil (26) einen Anschlußstutzen (27) aufweist, welcher eine zum Gehäuseinnenraum (24) führende Durchgangsöffnung (23) aufweist. In dem Gehäuse (1) ist ein Kolben (2, 19) in Richtung der Längsachse des Gehäuses (1) bewegbar angeordnet. Der Kolben (2, 19) weist einen Dichtring (20) auf, der in einer Umfangsnut eines Teiles (19) des Kolbens (2, 19) angeordnet ist.

In die dem Gehäusebodenteil (26) gegenüberliegende offene Stirnseite des topfförmigen Gehäuses (1) ist ein optisch transparentes Element (5) mit einer von außen sichtbaren Anzeigefläche (9) eingesetzt. Das optisch transparente Element (5, 9) ragt mit seinem dem Bodenteil (26) des Gehäuses (1) abgewandten Bereich ein Stück aus dem Gehäuse (1) heraus. Dieser herausragende, eine Anzeigefläche (9) bildende und als Sichtfenster dienende Bereich weist eine linsenförmige konvex gewölbte Oberflächenkrümmung auf.

Der dem Bodenteil (26) des Gehäuses (1) zugewandte Bereich des optisch transparenten Elementes (5, 9) liegt mit einer Ringfläche (17) auf einem Vorsprung (16) der Innenwand des Gehäuses (1) auf.

Gehalten wird das optisch transparente Element (5, 9) von einem sich auf das optisch transparente Element (5, 9) zu erstreckenden umlaufenden Vorsprung (7) der Wand des Gehäuses (1). Der Vorsprung (7) des Gehäuses (1) wird durch Umformen des Randbereiches des Gehäuses (1) hergestellt. Er liegt auf einer Fläche (8) des optisch transparenten Elementes (5, 9) auf, welche sich im Bereich der linsenförmigen Oberflächenkrümmung des optisch transparenten Elementes (5, 9) befindet. Es sind noch weitere Befestigungsarten für das optisch transparente Element (5, 9) am bzw. im Gehäuse (1) möglich wie z. B. ein aufgeschraubter Ring.

Das optisch transparente Element (5, 9) weist auf seiner dem Kolben (2, 19) zugewandten Seite einen zum Kolben (2, 19) hin offenen Hohlraum (11, 14) auf, der zur Aufnahme einer vom Kolben (2, 19) bewegbaren Farbfläche (12) dient, wobei der Kolben (2, 19) in Richtung der Längsachse des Hohlraumes (11, 14) bewegbar ist.

Im Gehäuseinnenraum (24) ist eine Druckfeder (3) angeordnet, die sich mit ihrem einen Ende an einer dem Gehäuseinnenraum (21) zugewandten Ringfläche (17) eines umlaufenden Vorsprungs des optisch transparenten Elementes (5, 9) abstützt. Die Druckfeder (3) beaufschlagt mit ihrem anderen Ende einen Teil (19) des Kolbens (2, 19) in Richtung vom optisch transparenten Element (5) bzw. der Anzeigefläche (9) weg. Mit seiner dem optisch transparenten Element (5, 9) abgewandten Seite begrenzt der Kolben (2, 19) eine Druckmittelkammer (22), die mit der als Druckmittelanschluß dienenden Durchgangsöffnung (23) verbunden ist.

Der Druckmittelanschluß steht z. B. mit dem Füllventil eines Fahrzeugreifens in Verbindung.

An eine ringförmige Fläche (18) des Kolbens (2, 19), die wie bereits erwähnt von der Druckfeder (3) beaufschlagt wird, schließt ein sich in Richtung auf einen Hohlraum (11, 14) des optisch transparenten Elementes (5, 9) zu erstreckender Fortsatz (2) des Kolbens (2, 19) an. Der Fortsatz (2) des Kolbens (2, 19) wird von einer den zylindrischen Bereich (14) des Hohlraumes (11, 14) begrenzenden Wand (15) geführt. Der Hohlraum (11, 14) des optisch transparenten Elementes (5, 9) weist einen an den zylindrischen Bereich (14) des Hohlraumes anschließenden kegelförmigen Bereich (11) auf, wobei der kegelförmige Bereich (11) sich in Richtung vom zylindrischen Bereich weg verjüngend weiter in das optisch transparente Element (5, 9) hinein erstreckt.

An dem Fortsatz (2) des Kolbens (2, 19) ist ein mit dem Kolben verbundenes Teil (4) angeordnet, das in dem Bereich des Hohlraumes (11, 14), welcher kegelförmig ausgebildet ist, ebenfalls eine dieser Kegelform des Hohlraumes (11, 14) entsprechende Kegelform aufweist. Der kegelförmige Bereich (12) des mit dem Fortsatz (2) des Kolbens (2, 19) verbundenen Teiles (4) besteht aus einem elastisch verformbaren Werkstoff.

Der kegelförmige Bereich (11) des Hohlraumes (11, 14) weist z. B. einen Winkel von ca. 60 ° auf. Der kegelförmige Bereich (12) des Fortsatzes (2) des Kolbens (2, 19) weist vorzugsweise einen kleineren Winkel als der kegelförmige Bereich (11) der Ausnehmung (11, 14) auf. Durch die Winkeldifferenz wird eine bessere Füllwirkung und Rückstellwirkung erreicht.

Das optisch transparente Element (5, 9) weist auf seiner der Anlagefläche (17) für die Druckfeder (3) abgewandten Seite eine Ausnehmung (10) auf, deren der Kegelfläche (13) gegenüberliegende Wand (29) schräg und vorzugsweise konzentrisch zur Längsachse des optisch transparenten Elementes (5, 9) verläuft, wobei diese Wand (29) vom Inneren des optisch transparenten Elementes (5, 9) ausgehend nach außen in Richtung auf die äußere Mantelfläche des optisch transparenten Elementes (5, 9) zu verläuft. Die den kegelförmigen Bereich (11) des Hohlraumes (11, 14) begrenzende Wand (13) des Hohlraumes (11, 14) des optisch transparenten Elementes (5, 9) und die dieser gegenüberliegende, die Ausnehmung (10) begrenzende Wand (29) schließen einen Winkel zwischen sich ein, der z. B. ca. 60 ° betragen kann.

Auf die Wand (29) ist eine einen farbigen Bereich bildende farbige Fläche aufgespritzt bzw. durch Eingießen erzeugt. Vorzugsweise ist die Farbe dieses farbigen Bereiches rot und eine Tagesleuchtfarbe, da rot eine starke Signalwirkung hat und die Leuchtwirkung die Erkennbarkeit verbessert.

Der kegelförmige Bereich des mit dem Kolben (2, 19) verbundenen Teiles (4) besteht, aus einem elastisch verformbaren Material. Wenigstens dieser Teil des mit dem Kolben (2, 19) verbundenen Teiles (4) trägt in dem Bereich eine Farbfläche (12), der beim Einführen des Teiles (4) in den Hohlraum (11, 14) die totalreflektierende Grenzfläche berührt, die von der den kegelförmigen Bereich (11) des Hohlraumes (11, 14) begrenzenden Wand (13) des optisch transparenten Elementes (5, 9) und der angrenzenden Luftschicht gebildet wird. Die Farbfläche (12) ist vorzugsweise grün, so daß sie in starkem Kontrast zu der Farbe Rot des den farbigen Bereich (6) bildenden Farbstreifens steht.

In Figur 2 ist eine Einrichtung dargestellt, die im wesentlichen der Einrichtung gemäß Figur 1 entspricht. Der besseren Übersicht halber sind die in Figur 1 und 2 gleichen Bauteile mit gleichen Bezugsziffern versehen. Da es sich um direkt miteinander vergleichbare Einrichtung handelt, wird hier nur auf das Detail eingegangen, durch welches sich die Einrichtung gemäß Figur 2 von der Einrichtung nach Figur 1 unterscheidet.

Wie in Figur 1 weist auch in Figur 2 das optisch transparente Element (5, 9) in seiner Mantelfläche eine Ausnehmung (10) auf, deren Wand (29) schräg und vorzugsweise konzentrisch zur Längsachse des optisch transparenten Elementes (5, 9) verläuft, so daß die Wand (29) und die Wand (13) einen Winkel von z. B. 60 ° einschließen.

In die Ausnehmung (10) ist eine farbige Elastomer-Dichtung (28) eingebracht, die mit ihrer einen Seite dichtend an der Wand (29) der Ausnehmung (10) und mit ihrer dem optisch transparenten Element (5, 9) abgewandten Seite dichtend an der Innenwand des Gehäuses 1 der Einrichtung anliegt und so ein Eindringen von Schmutz und Feuchtigkeit durch den Spalt zwischen der äußeren Mantelfläche des optisch transparenten Elementes (5, 9) und der Innenwand des Gehäuses (1) verhindert.

Die Elastomer-Dichtung (28) hat entsprechend dem Farbstreifen (6) in Figur 1 vorzugsweise ebenfalls die Farbe Rot. Die in den kegelförmigen Bereich (11) des Hohlraumes (11, 14) eindringende kegelförmige Farbfläche (12) des mit dem Kolben (2, 19) verbundenen elastisch verformbaren Teiles (4) weist vorzugsweise die Farbe Grün auf.

Die Funktion der vorstehend beschriebenen Einrichtungen gemäß Figur 1 und Figur 2 wird nachfolgend näher erläutert.

Wie bereits erwähnt, ist bei der Einrichtung gemäß Figur 2 der in Figur 1 von dem Farbstreifen (6) gebildete farbige Bereich von einer farbigen Elastomer-Dichtung (28) gebildet. Die Funktion der Einrichtung gemäß Figur 2 ist die gleiche wie die der gemäß Figur 1.

Figur 1 zeigt den Zustand der Einrichtung bei zu niedrigem Reifendruck und Figur 2 zeigt den Zustand der Einrichtung bei ordnungsgemäßen Reifendruck.

Ist die Kraft des z. B. von einem druckluftgefüllten Reifen kommenden, in der Druckmittelkammer (22) anstehenden und den Kolben (2, 19) gegen die Kraft der Druckfeder (3) beaufschlagenden Druckes bei nicht ausreichendem Reifendruck gleich oder geringer als die von der Druckfeder (3) entgegengerichtet auf den Kolben (2, 19) einwirkende Kraft, so befindet sich der Kolben (2, 19) und somit auch das mit dem Kolben verbundene Teil (4) in der in Figur 1 dargestellten Stellung.

In dieser Stellung ist zwischen der Wand (13) und der äußeren Mantelfläche des mit dem Kolben (2, 19) verbundenen Teiles (4) ein mit Luft gefüllter Spalt (11, 14) vorhanden. Von dem farbigen Bereich (6) bzw. (28) ausgehende Lichtstrahlen werden von der optischen Grenzfläche Wand 13/Luft total reflektiert und zur Anzeigefläche (9) hin gelenkt. Diese optische Grenzfläche Wand 13/Luft reflektiert des weiteren von der Farbfläche (12) ausgehende Lichtstrahlen so, daß diese nicht zur Anzeigefläche (9) hin gelangen können. Dadurch erscheint die Anzeigefläche (9) rot.

Steigt der Druck im Fahrzeugreifen von einem Minderdruckwert auf eine mittels der Kraft der Druckfeder (3) vorbestimmbare ausreichende Höhe an, so wird durch die Kraft des Druckes in der Druckmittelkammer (22) der Kolben (2, 19) gegen die Kraft der Druckfeder (3) nach oben in Richtung auf die Anzeigefläche (9) zu bewegt, wobei das mit dem Kolben (2, 19) verbundene Teil (4) in den Hohlraum eintaucht, und zwar so weit, bis es seine Endlage erreicht und die elastisch verformbare Farbfläche (12) an der den kegelförmigen Bereich (11) des Hohlraumes (14, 11) begrenzenden Wand (13) zur Anlage kommt.

Der kegelförmige Bereich (11) des Hohlraumes (11, 14) des optisch transparenten Elementes wird dabei von der Farbfläche (12) des mit den Kolben (2, 19) verbundenen Teiles (4) formschlüssig so ausgefüllt, daß die Wand (13) abgedeckt wird und somit die optische Grenzfläche Wand 13/Luft nicht mehr existiert. Dies hat zur Folge, daß von dem farbigen Bereich (Farbstreifen (6) bzw. Dichtung (28)) ausgehende Lichtstrahlen nicht mehr an der Wand (13) zur Anzeigefläche (9) hin reflektiert werden. Da der farbige Bereich (6) bzw. (28) im übrigen so angeordnet und ausgebildet ist, daß er durch die Anzeigefläche (9) nicht direkt zu sehen ist, verschwindet die rote Farbe des farbigen Bereichs (6) bzw. (28) in der Anzeigefläche (9).

Mit dem Unwirksamwerden der optischen Grenzfläche Wand 13/Luft wird weiterhin die Totalreflexion der von der Farbfläche (12) ausgehenden Lichtstrahlen aufgehoben. Dies hat zur Folge, daß diese Lichtstrahlen zur Anzeigefläche (9) hin gelangen. Dadurch erscheint die Anzeigefläche (9) nicht mehr rot sondern grün, da die Farbe der Farbfläche (12) des Teiles (4) Grün ist.

Der Farbstreifen (6) kann selbstverständlich auch jede andere Farbe haben. Desgleichen kann auch die Farbfläche (12) des in den Hohlraum (11, 14) eintauchenden Teils (4) eine andere Farbe aufweisen. Von Bedeutung ist, daß sich die Farbe des farbigen Bereichs (Farbstreifen (6) bzw. Dichtung (28)) von der Farbe der Farbfläche (12) unterscheidet.

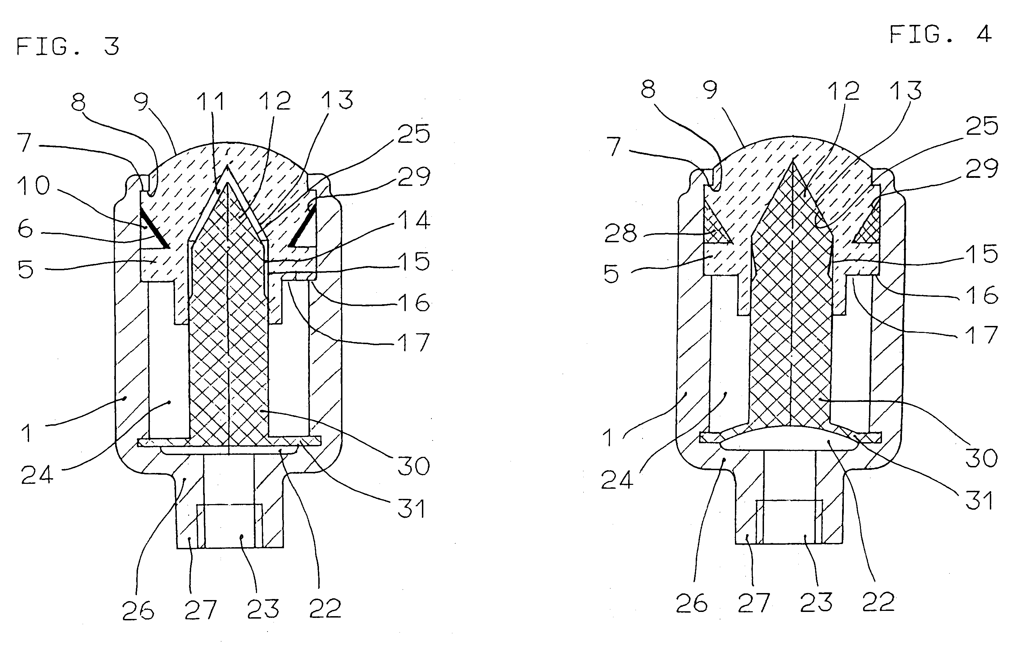

Die Figuren 3 und 4 zeigen jeweils eine Einrichtung, die den in den Figuren 1 und 2 gezeigten Einrichtungen entsprechen. Sowohl in Figur 3 als auch in Figur 4 ist an Stelle eines im Gehäuse (1) gegen die Kraft einer Druckfeder verschiebbaren Kolbens ein Membrankolben (31) eingespannt, welcher auf seiner dem optisch transparenten Element (5, 9) zugewandten Seite eine sich in den Hohlraum (11, 14) des optisch transparenten Elementes (5, 9) hinein erstreckende Anformung (30) aus Kunststoff aufweist. Die für den Kolben (31) erforderliche Rückstellkraft wird von der Membran aufgebracht. Selbstverständlich ist es auch möglich, zwischen dem Membrankolben (31) und dem optisch transparenten Element (9) eine Druckfeder anzuordnen.

Vorzugsweise besteht der die Farbfläche (12) tragende kegelförmige Bereich der Anformung (30) aus einem weicheren elastisch verformbaren Material als der mit dem Kolben verbundene Bereich (30) dieser Anformung.

Der Bereich (30) kann jedoch außer aus Kunststoff auch aus einem anderen Material bestehen, wie z. B. aus Metall, und z. B. durch Anvulkanisieren an der Membran (31) mit dieser verbunden sein. Es empfiehlt sich jedoch den die Farbfläche (12) tragenden Bereich der Anformung (30) aus einem weichen elastisch verformbaren Material herzustellen, damit sich dieser kegelförmig ausgebildete Bereich formschlüssig an die dem Hohlraum (11, 14) begrenzende Wand (13) des optisch transparenten Elementes (5) andrücken kann.

Wie der in den Figuren 1 und 2 dargestellte Kolben (2) begrenzt in den Ausführungsbeispielen gemäß den Figuren 3 und 4 der Membrankolben (31) eine Druckmittelkammer (22), die über eine Durchgangsöffnung (23) in einem Anschlußstutzen (27) mit Druckmittel beaufschlagbar ist.

Figur 3 zeigt ein optisch transparentes Element (5, 9) mit einer Ausnehmung (10), in der wie in Figur 1 ein Farbstreifen (6) einen farbigen Bereich bildet. Anstelle dieses Farbstreifen (6) weist die Einrichtung nach Figur 4 ein farbiges Elastomer-Dichtelement (28) auf, wie dies auch bei der Einrichtung gemäß Figur 2 der Fall ist.

Das Gehäuse der Einrichtungen gemäß den Figuren 1 bis 4 kann aus Metall oder auch aus Kunststoff bestehen. Das optisch transparente Element kann aus einem farblosen Kunststoff oder Glas bestehen. Bei den Ausführungsbeispielen gemäß der Figuren 3 und 4 muß der als Membrankolben wirkende Kolben aus einem elastisch verformbaren Material bestehen, bei den Ausführungsbeispielen gemäß der Figuren 1 und 2 kann der Kolben aus Metall oder Kunststoff gefertigt werden. Bei den Ausführungsformen der Einrichtung gemäß der Figuren 1 und 2 kann der Kolben an seiner dem optisch transparenten Element zugewandten Seite direkt mit einer Farbfläche versehen werden, so daß auf ein zusätzliches mit dem Kolben zu verbindendes Teil verzichtet werden kann.

Der Hohlraum im optisch transparenten Element kann eine Kegelform aufweisen. Er kann jedoch auch anderer Weise vom Kolben weg sich verjüngend ausgebildet sein, was dann natürlich auch für die dem Hohlraum zugewandte Seite des Kolbens bzw. dessen Farbfläche gilt. Der Kolben kann so ausgebildet sein, daß seine der Innenwand des optisch transparenten Elementes zugewandte Seite von dem den Kolben beaufschlagenden Druckmittel gegen diese Wand andrückbar ist.

Denkbar ist es auch, das Gehäuse und das optisch transparente Element einstückig auszubilden.

Die Druckfeder (3) in Figur 1 und Figur 2 kann sich - wie gezeigt - an der Fläche (17) des Teiles (5) des optisch transparenten Elementes (5, 9) abstützen, sie kann sich aber auch in nicht dargestellter Weise an einem an der Gehäuseinnenwand vorzusehenden Vorsprung abstützen.

Ebenso ist es möglich die Druckfeder (3) in Figur 1 und Figur 2 durch ein Teil aus einem elastomeren Werkstoff zu ersetzen, wobei dieses Teil zwischen den einander zugewandten Seiten des optisch transparenten Elementes (5, 9) und des Kolbens (2, 19) anzuordnen ist.

Bei den Ausführungen gemäß Figur 1 und Figur 2 mit der Verwendung eines Farbstreifens (6) kann eine separate Dichtung entweder im Hohlraum (10) oder zwischen der Wand des Gehäuses und dem optisch transparenten Element vorgesehen werden.

## Patentansprüche

1. Einrichtung zur optischen Anzeige des Druckes eines Mediums, insbesonderes des Luftdruckes in einem Fahrzeugreifen, mit folgenden Merkmalen:
a) Es ist ein Gehäuse (1) vorgesehen, in welchem ein Kolben (2, 19) vom Druck des Mediums gegen eine Rückstellkraft bewegbar angeordnet ist;
b) das Gehäuse (1) weist an seiner einen Stirnseite ein optisch transparentes Element (5) mit einer von außen sichtbaren Anzeigefläche (9) auf;
gekennzeichnet durch die folgenden Merkmale:
c) das optisch transparente Element (5) weist auf seiner dem Kolben (2, 19) zugewandten Seite einen zum Kolben (2, 19) hin offenen Hohlraum (11, 14) auf, der zur Aufnahme einer von dem Kolben (2, 19) bewegbaren Farbfläche (12) dient, wobei der Kolben (2, 19) in Richtung der Längsachse des Hohlraumes (11, 14) bewegbar ist;
d) das optisch transparente Element (5) weist auf der seine Längsachse umhüllenden Umfangsfläche einen durch die Anzeigefläche (9) direkt nicht sichtbaren farbigen Bereich (6) auf;
e) die den Hohlraum (11, 14) begrenzende Wand des optisch transparenten Elementes (5) ist so ausgerichtet, daß von dem farbigen Bereich (6) ausgehende Lichtstrahlen an einer Grenzfläche, die von der Wand des Hohlraumes (11, 14) und der angrenzenden Luftschicht gebildet ist, zu der Anzeigefläche (9) hin reflektiert werden;
f) die von dem Kolben (2, 19) bewegbare Farbfläche (12) weist eine andere Farbe auf als der am optisch transparenten Element (5, 9) vorgesehene farbige Bereich (6);
g) die von dem Kolben (2, 19) bewegbare Farbfläche (12) ist so ausgebildet, daß sie bei Druckbeaufschlagung des Kolbens (2, 19) ab einer vorbestimmten Druckhöhe des Mediums in der Endlage des Kolbens (2, 19), die von der Wand des Hohlraums (11, 14) gebildete Grenzfläche wenigstens teilweise abdeckt, wobei die von der Farbfläche (12) ausgehenden Lichtstrahlen vor Erreichen der Endlage des Kolbens (2, 19) an der Grenzfläche reflektiert werden und in der Endlage des Kolbens (2, 19) zur Anzeigefläche (9) durchgelassen werden, so daß die Farbe der vom Kolben (2, 19) bewegbaren Farbfläche (12) sichtbar wird.

2. Einrichtung nach Anspruch 1, dadurch gekennzeichnet, daß das Gehäuse (1) und das optisch transparente Element (5, 9) als eine einstückige Baueinheit ausgebildet sind.

3. Einrichtung nach wenigstens einem der vorhergehenden Ansprüche, dadurch gekennzeichnet, daß das optisch transparente Element (5) aus der Stirnseite des Gehäuses (1) herausragt und dort im Bereich der Anzeigefläche (9) eine linsenförmige Oberflächenkrümmung (9) aufweist.

4. Einrichtung nach wenigstens einem der vorhergehenden Ansprüche, dadurch gekennzeichnet, daß der Hohlraum (11, 14) wenigstens in seinem dem farbigen Bereich (6) gegenüberliegenden Bereich kegelförmig ausgebildet ist.

5. Einrichtung nach wenigstens einem der vorhergehenden Ansprüche, dadurch gekennzeichnet, daß die vom Kolben (2, 19) bewegbare Farbfläche (12) wenigstens in ihrem in der Endlage des Kolbens (2, 19) dem farbigen Bereich (6) des optisch transparenten Elementes (5) gegenüberliegenden Bereich kegelförmig ausgebildet ist.

6. Einrichtung nach Anspruch 1, dadurch gekennzeichnet, daß die Rückstellkraft von einer Feder (3) erzeugt wird, die sich mit ihrem einen Ende im Gehäuse (1) abstützt und mit ihrem anderen Ende den Kolben (2, 19) in Richtung von der Anzeigefläche (9) weg beaufschlagt.

7. Einrichtung nach Anspruch 1, dadurch gekennzeichnet, daß die Rückstellkraft von einem Teil aus einem elastomeren Werkstoff erzeugt wird, wobei dieses Teil zwischen den einander zugewandten Seiten des optisch transparenten Elementes (5, 9) und des Kolbens (2, 19) angeordnet ist.

8. Einrichtung nach wenigstens einem der vorhergehenden Ansprüche, dadurch gekennzeichnet, daß die von dem Kolben (2, 19) bewegbare Farbfläche (12) auf einem Teil (2, 12) aufgebracht ist, das aus einem elastisch verformbaren Werkstoff besteht.

9. Einrichtung nach wenigstens einem der vorhergehenden Ansprüche, dadurch gekennzeichnet, daß der farbige Bereich (6) des optisch transparenten Elementes (5) von einer entsprechend farbigen elastischen Dichtung (28) gebildet ist, die an dem optisch transparenten Element (5) in diesem Bereich (6) anliegt.

10. Einrichtung nach wenigstens einem der vorhergehenden Ansprüche, dadurch gekennzeichnet, daß der Kolben (2, 19) als Membran mit einem angeformten und die Farbfläche (12) tragenden Elastomer-Füllstück für den Hohlraum (11, 14) des optisch transparenten Elementes (5, 9) ausgebildet ist.

11. Einrichtung nach wenigstens einem der vorhergehenden Ansprüche, dadurch gekennzeichnet, daß der farbige Bereich (6) in das optisch transparente Element (5) eingegossen bzw. eingespritzt ist.

## Claims

1. Device for optical indication of the pressure of a medium, especially of the air pressure in a vehicle tyre, having the following features:
a) A housing (1) is provided in which a piston (2, 19) is arranged to be movable by the pressure of the medium against a return force;
b) the housing (1) has at one end an optically transparent element (5) with an indicating surface (9) visible from outside;
characterised by the following features:
c) the optically transparent element (5) has on the side facing the piston (2, 19) a cavity (11, 14) which is open towards the piston (2, 19) and serves to receive a coloured surface (12) movable by the piston (2, 19), the piston (2, 19) being movable in the direction of the longitudinal axis of the cavity (11, 14);
d) the optically transparent element (5) has on the circumferential surface enclosing its longitudinal axis a coloured region (6) which is not directly visible through the indicating surface (9);
e) the wall, bounding the cavity (11, 14), of the optically transparent element (5) is so arranged that light rays issuing from the coloured region (6) are reflected on a boundary surface, which is formed by the wall of the cavity (11, 14) and the adjoining air layer, towards the indicating surface (9);
f) the coloured surface (12) movable by the piston (2, 19) has a different colour from the coloured region (6) provided on the optically transparent element (5, 9);
g) the coloured surface (12) movable by the piston (2, 19) is so constructed that, when the piston (2, 19) is subjected to pressure as from a predetermined pressure level of the medium, in the end position of the piston (2, 19), it at least partially covers over the boundary surface formed by the wall of the cavity (11, 14), the light rays issuing from the coloured surface (12) being reflected on the boundary surface before the end position of the piston (2, 19) is reached and being let through to the indicating surface (9) in the end position of the piston (2, 19) so that the colour of the coloured surface (12) movable by the piston (2, 19) becomes visible.

2. Device according to Claim 1, characterised in that the housing (1) and the optically transparent element (5, 9) are in the form of a one-piece structural component.

3. Device according to at least one of the preceding claims, characterised in that the optically transparent element (5) projects from the end of the housing (1) and there, in the region of the indicating surface (9), has a lens-like surface curvature (9).

4. Device according to at least one of the preceding claims, characterised in that the cavity (11, 14) is cone-shaped at least in its region opposite the coloured region (6).

5. Device according to at least one of the preceding claims, characterised in that the coloured surface (12) movable by the piston (2, 19) is cone-shaped at least in its region which is opposite the coloured region (6) of the optically transparent element (5) in the end position of the piston (2, 19).

6. Device according to Claim 1, characterised in that the return force is produced by a spring (3) which bears with one end in the housing (1) and with its other end urges the piston (2, 19) in a direction away from the indicating surface (9).

7. Device according to Claim 1, characterised in that the return force is produced by a part made of an elastomeric material, this part being arranged between the sides, facing one another, of the optically transparent element (5, 9) and of the piston (2, 19).

8. Device according to at least one of the preceding claims, characterised in that the coloured surface (12) movable by the piston (2, 19) is mounted on a part (2, 12) which consists of an elastically deformable material.

9. Device according to at least one of the preceding claims, characterised in that the coloured region (6) of the optically transparent element (5) is formed by a correspondingly coloured elastic seal (28) which bears against the optically transparent element (5) in this region (6).

10. Device according to at least one of the preceding claims, characterised in that the piston (2, 19) is in the form of a diaphragm with an integrally moulded elastomeric filling piece, carrying the coloured surface (12), for the cavity (11, 14) of the optically transparent element (5, 9).

11. Device according to at least one of the preceding claims, characterised in that the coloured region (6) is cast or injected into the optically transparent element (5).

## Revendications

1. Dispositif d'indication optique de la pression d'un fluide, en particulier la pression de l'air dans un pneumatique de véhicule, comprenant les éléments suivants :
a) il est prévu un boîtier (1) dans lequel est agencé un piston (2, 19) capable d'être déplacé par la pression du fluide à l'encontre d'une force de rappel ;
b) le boîtier (1) comporte sur l'une de ses faces frontales un élément optique transparent (5) avec une surface indicatrice (9) visible depuis l'extérieur ;
caractérisé par les éléments suivants :
c) l'élément optique transparent (5) présente sur son côté orienté vers le piston (2, 19) une cavité (11, 14) ouverte en direction du piston (2, 19), cette cavité servant à recevoir une surface colorée (12) susceptible d'être déplacée par le piston (2, 19), le piston (2, 19) pouvant être déplacé en direction de l'axe longitudinal de la cavité (11, 14) ;
d) l'élément optique transparent (5) comporte sur sa surface périphérique qui entoure son axe longitudinal une région colorée (6) qui n'est pas directement visible à travers la surface indicatrice (9) ;
e) la paroi de l'élément optique transparent (5) qui délimite la cavité (11, 14) est dirigée de telle manière que les rayons lumineux sortant de la région colorée (6) sont réfléchis en direction de la surface indicatrice (9) par une surface limite qui est formée par la paroi de la cavité (11, 14) et par la couche d'air limitrophe ;
f) la surface colorée (12) déplaçable par le piston (2, 19) présente une autre couleur que celle de la région colorée (6) prévue sur l'élément optique transparent (5, 9) ;
g) la surface colorée (12) déplaçable par le piston (2, 19) est réalisée de telle façon que lors de la sollicitation du piston (2, 19) sous pression, et à partir d'une valeur prédéterminée de la pression du fluide et dans la position finale du piston (2, 19), cette surface recouvre au moins partiellement la surface limite formée par la paroi de la cavité (11, 14), de sorte que les rayons lumineux partant de la surface colorée (12) sont réfléchis sur la surface limite avant d'atteindre la position finale du piston (2, 19), et lorsque le piston (2, 19) est dans sa position finale, ces rayons lumineux passent en direction de la surface indicatrice (9), de sorte que la couleur de la surface colorée (12) déplaçable par le piston (2, 19) devient visible.

2. Dispositif selon la revendication 1, caractérisé en ce que le boîtier (1) et l'élément optique transparent (5, 9) sont réalisés sous la forme d'une unité structurelle d'une seule pièce.

3. Dispositif selon l'une au moins des revendications précédentes, caractérisé en ce que l'élément optique transparent (5) dépasse de la face frontale du boîtier (1) et y présente dans la région de la surface indicatrice (9) une courbure de surface en forme de lentille (9).

4. Dispositif selon l'une au moins des revendications précédentes, caractérisé en ce que la cavité (11, 14) est réalisée sous forme conique, au moins dans sa région opposée à la région colorée (6).

5. Dispositif selon l'une au moins des revendications précédentes, caractérisé en ce que la surface colorée (12) déplaçable par le piston (2, 19) est réalisée sous forme conique, au moins dans sa région qui, dans la position finale du piston (2, 19), est opposée à la région colorée (6) de l'élément optique déformable (5).

6. Dispositif selon la revendication 1, caractérisé en ce que la force de rappel est produite par un ressort (3) qui s'appuie par l'une de ses extrémités dans le boîtier (1) et qui sollicite par son autre extrémité le piston (2, 19) en éloignement de la surface indicatrice (9).

7. Dispositif selon la revendication 1, caractérisé en ce que la force de rappel est produite par une pièce en matériau élastomère, cette pièce étant agencée entre les côtés en vis-à-vis de l'élément optique transparent (5, 9) et du piston (2, 19).

8. Dispositif selon l'une au moins des revendications précédentes, caractérisé en ce que la surface colorée (12) déplaçable par le piston (2, 19) est appliquée sur une pièce (2, 12) qui est réalisée en un matériau élastiquement déformable.

9. Dispositif selon l'une au moins des revendications précédentes, caractérisé en ce que la région colorée (6) de l'élément optique transparent (5) est formée par un joint élastique (28) de couleur correspondante, qui est appliqué dans cette région (6) sur l'élément optique transparent (5).

10. Dispositif selon l'une au moins des revendications précédentes, caractérisé en ce que le piston (2, 19) est réalisé sous la forme d'une membrane avec un élément de remplissage en élastomère formé sur cette membrane et portant la surface colorée (12), qui remplit la cavité (11, 14) de l'élément optique transparent (5, 9).

11. Dispositif selon l'une au moins des revendications précédentes, caractérisé en ce que la région colorée (6) est moulée ou injectée dans l'élément optique transparent (5).
